# EUROPEAN PATENT SPECIFICATION

(11) **EP 3 459 368 B1**
(45) Date of publication and mention of the grant of the patent: **20.08.2025**
(21) Application number: 17192051.5
(22) Date of filing: 20.09.2017
(51) Int. Cl.: A23L 29/269, A23L 33/105, A23L 29/256

(54) **FOOD INTEGRATOR FOR ANTINEOPLASTIC THERAPIES**
LEBENSMITTELINTEGRATOR FÜR ANTINEOPLASTISCHE THERAPIEN
INTÉGRATEUR ALIMENTAIRE POUR THÉRAPIES ANTINÉOPLASTIQUES

(43) Date of publication of application: 27.03.2019
(73) Proprietor: Geophyt S.r.L., 15067 Novi Ligure (AL) (IT)
(72) Inventor: MERLO, Enrico, I-15067 NOVI LIGURE (Alessandria) (IT)
(74) Representative: Lunati & Mazzoni S.r.L.

(56) References cited:
- WO-A2-2008/000431
- US-A1- 2005 238 740
- LINNA ZHANG ET AL: "Activation of a mouse macrophage cell line by acemannan: The major carbohydrate fraction from Aloe vera gel", IMMUNOPHARMACOLOGY., vol. 35, no. 2, 1 November 1996 (1996-11-01), XX, pages 119 - 128, XP055432537, ISSN: 0162-3109, DOI: 10.1016/S0162-3109(96)00135-X
- MEI-LAN HE ET AL: "Gum mastic inhibits the expression and function of the androgen receptor in prostate cancer cells", CANCER, vol. 106, no. 12, 15 June 2006 (2006-06-15), US, pages 2547 - 2555, XP055430819, ISSN: 0008-543X, DOI: 10.1002/cncr.21935

## Description

The present invention relates to a supplement or food integrator for use in anti-neoplastic therapies, such as radiotherapy and/or chemotherapy.

In particular, the present invention relates to a food integrator suitable for alleviating the side effects resulting from radio-chemotherapy for cancer problems.

In Italy, as in the rest of the world, the number of malignant tumours is constantly growing, with about 400,000 new cases in 2012, representing the second cause of death, after cardiovascular diseases, and 30% of all deaths.

Non-surgical therapies used for treating malignant tumours, such as chemotherapy, radiotherapy or a combination thereof are becoming increasingly common and effective, but they are associated with short-term and long-term adverse side effects.

The main side effects of said therapies include acute and/or chronic oral complications.

In particular, there are various oral complications of cancer treatment and these can have an important negative impact on the affected patient's quality of life, on the outcome of the therapies during the treatment phase and, consequently, on the prognosis of the neo-plastic pathology.

The conditions identified, as a result of radio chemotherapeutic treatment, include those affecting the mouth and the oesophagus.

The number of oral problems varies significantly: from 30 to 100% of cancer patients can suffer from oral complications with important implications for their survival and well-being during and after therapy. Their onset frequently requires supportive therapies and, in the worst cases, can compromise or hinder therapy.

The negative side effects of radiation on the oral cavity are immediate, such as xerostomia, mucositis, bacterial infections, dysgeusia and dysphagia.

Mucositis is damage of the mucous barrier associated with non-surgical therapies of cancer and can affect the mucous lining of the gastrointestinal tract and the upper airways. More than 40% of patients who are given standard doses of chemotherapy and about 75% of patients who receive high doses of chemotherapy develop oral mucositis.

Oral mucositis becomes clinically apparent 4-5 days after starting chemotherapy, radiotherapy treatment or radio-chemotherapy treatment and generally peaks after 7-14 days, with the appearance of ulcers. It clears up by itself within three weeks after the end of chemotherapy, radiotherapy or radio-chemotherapy.

It is often not limited to said period, but it can develop into a longer-lasting pathology with devastating effects on a patient's recovery, even hindering a patient's complete wellbeing for years.

Furthermore, ulcers and pseudomembranes may appear, preventing normal swallowing. Mucositis may not only prevent the oral intake of food and liquids, but it can also lead to the obstruction of the oropharyngeal airways.

Consequently, oral mucositis can develop in such a debilitating manner as to compromise a patients' quality of life; it can be accompanied by pain, dysgeusia, dysphagia, also severe dysphagia, as well as the consequent incapacity for good nutrition, even compromising the individual's nutritional state.

For this reason, parenteral nutrition becomes necessary in many cases.

At present, a plurality of medicines and/or different kinds of substances are used. Said medicines are principally aimed at reducing the effects related to ulcers on the inner surface of the mouth or inside the oesophagus.

Said medicines or substances can comprise benzydamine hydrochloride mouthwashes, chlorhexidine mouthwashes, corticosteroids, sucralfate, allopurinol, prostaglandin, acyclovir and hyaluronic acid especially for oral mucositis.

Whereas, sucralfate, Propolis, Maalox and Gaviscon are generally used for oesophageal mucositis.

The illustrated prior art comprises a number of important inconveniences.

In particular, none of the previously stated substances can truly prevent mucositis, whether oral or oesophageal.

In particular, benzydamine is not suitable for eliminating the ulcerating effects of mucositis; it is only suitable for reducing the frequency and severity of the ulcers, alleviating the pain.

Whereas, chlorhexidine is a disinfectant that prevents further infections inside the ulcers, but it serves no healing purpose in reducing the previously stated unpleasant effects.

The same argument also applies to corticosteroids, sucralfate, allopurinol, prostaglandin, acyclovir and hyaluronic acid, which, on their own, only have palliative effects on the determined pathologies.

Furthermore, a number of medicines can include the inconvenience of only being assimilable by a patient intravenously, with serious side effects, also including hospitalisation, with increased costs or costly methods and the medicine itself is also extremely expensive.

The same considerations can also be made for medicines used to treat oesophageal ulcers.

Sucralfate, for example, is a class C drug, whose function is not to alleviate or cure ulcers, but to isolate them from the gastric juices coming from the stomach or other painful acidic substances.

Propolis is an ineffective palliative.

Whereas, Maalox doesn't serve to act on the disease, but it is, as we know, an antacid drug, which prevents the production of acidic substances inside the stomach.

Finally, also Gaviscon acts principally on the gastric juices present in the stomach creating a protective layer over the liquid in the stomach to prevent the gastric acids from returning to ulcered areas. Consequently, said drug has no effect on the condition in question.

Other prior art are WO2008/000431, US2005/0238740, "Activation of a mouse macrophage cell line by acemannan: The major carbohydrate fraction from Aloe vera gel" by L. Zhang et al, 1996, Immunopharmacology 25, 119-128 and "Gum Mastic Inhibits the Expression and Function of the Androgen Receptor in Prostate Cancer Cells" by He Mei-Lan et al, 2006, Cancer, Volume 106, Number 12.

In this situation, the technical task at the root of the present invention is to develop a food integrator for use in anti-neoplastic therapies capable of substantially overcoming, at least in part, the stated inconveniences.

An important object of the invention within the scope of said technical task is to obtain a food integrator capable of preventing the side effects resulting from radiotherapy, chemotherapy or radio chemotherapy.

In particular, an important object of the invention is to develop a supplement suitable for preventing oral or oropharyngeal mucositis.

A further important object of the invention is to develop a supplement whose daily doses are limited and which does not include side effects, in turn, that limit their use, as is the case with a number of current state-of-the-art drugs.

In conclusion, a further important object of the invention is to develop a supplement, which is limitedly invasive and consequently suitable for improving user compliance, besides being cheap.

Preferably, it is also an object of the invention to develop a supplement that can be taken at home, without hospitalisation costs.

The technical task and specified objects are achieved by means of a food integrator for use in anti-neoplastic therapies, as claimed in the accompanying claim 1. Preferred embodiments are described in the dependent claims.

In the present document, when measurements, values, shapes and geometrical references (such as perpendicularity and parallelism) are associated with words, such as "approximately" or other similar terms, for example "practically" or "substantially", they shall be understood as without errors of measurement or inaccuracies resulting from production and/or manufacturing errors and, above all, without a slight divergence from the value, measurement, shape or geometrical reference with which it is associated. For example, if said terms are associated with a value, they preferably indicate a divergence of no more than 10% of the same value.

Furthermore, when terms such as "first", "second", "greater", "lower", "principal" and "secondary" are used, they do not necessarily identify an order, a relationship priority or relative position, but they may simply be used to distinguish different components more clearly.

Unless otherwise stated, the measurements and data contained in this text shall be considered as produced in International Standard Atmosphere ICAO (ISO 2533).

The invention relates to a food integrator for use in anti-neoplastic therapies, in particular a food integrator principally aimed at treating side effects relating to anti-neoplastic therapies, such as radiotherapy, chemotherapy or radio-chemotherapy. In particular, the supplement shows excellent results for treating the related side effects of radiotherapy or radio-chemotherapy.

In particular, the food integrator for use in anti-neoplastic therapies is suitable for treating side effects, such as oral and/or oesophagus type mucositis.

The food integrator for use in anti-neoplastic therapies according to the invention comprises three main active ingredients.

Said main active ingredients are a first ingredient defined by Aloe Vera, a second ingredient comprising Klamath algae and a third ingredient comprising Mastiha resin.

The food integrator can be an aqueous solution. The aqueous solution comprises water, for example purified, in doses comprised between 90% and 99% of the total amount. More preferably, the water is present in doses comprised between 93% and 98%. More opportunely, the water is present in a 96% aqueous solution.

Mastiha resin is a substance that is extracted from the mastic tree (Pistacia lentiscus L.), also known as "tears of Chios" as it is mainly found on the island of Chios.

It is composed of latex that flows from the trunk of the mastic tree and condenses into small drops. Moreover, the resin dries into hard brittle resin and becomes clear when it comes into contact with the air.

An example of Mastiha resin is the one marketed by "The Chios Mastiha Growers Association" under the brand name of "Mastiha capsules".

Mastiha resin is preferably present, in a recommended quantity, in doses weighing between 17% and 27% in relation to the total, excluding the water or solvent. More preferably, Mastiha resin is present in doses comprised between 20% and 25% and even more opportunely equal to about 22.5% in relation to the total, excluding the water or solvent.

If the food integrator is in an aqueous solution, the Mastiha resin is present in doses, in relation to the total (water included), comprised between 0.3% and 1.5%, more preferably between 0.7% and 1.1% and more opportunely about 0.9%.

Aloe Vera is a succulent plant that belongs to the Aloeaceae family and prefers hot, dry climates.

Generally, said plant grows in hot, dry climates and is composed of simple leaves arranged in tufts, with a length of about 40-60 cm.

The long leaves are generally lanceolate, with a pointed tip and have a thick, fleshy cuticle due to the presence of water-bearing parenchyma contained within.

From a chemical point of view, Aloe Vera comprises three large classes of components: complex sugars, in particular glucomannans, notably acemannan, in the clear gel inside, with immuno-stimulant properties; anthraquinones in the green coriaceous part of the leaf, with its powerful laxative effect, as well as other substances, such as mineral salts, vitamins, amino acids, organic acids, phospholipids, enzymes, lignin and saponins.

In particular, Aloe Vera is generally used for treating the skin and has anti irritant properties. For this reason, it is often used in products, such as detergents, soaps, shampoos and other skin cosmetics.

In the food integrator, Aloe Vera is preferably comprised in the form of powder. However, it can be further processed to create a gel component.

An example of Aloe Vera is the one marketed by Zuccari under the brand name of "[Aloe vera] al quadrato", or by Aboca under the brand name of Neobianacid.

Aloe Vera is preferably contained in a recommended quantity, in relation to the Mastiha resin, in doses weighing between 40% and 60% inclusive, more preferably between 45% and 55% and even more preferably in doses equal to about a half.

Klamath algae is composed of a clump of green or blue algae, which belongs to the Aphanizomenon flos-aquae species. Its name comes from the fact that the aforesaid algae grows and is gathered from Lake Klamath, in the United States, more specifically, in Oregon.

The algae is generally harvested during hot periods and the plants are subsequently put into tanks and undergo thermal treatment, which brings them to temperatures close to 0°.

After micro-filtration, they are purified and freeze-dried, ready to be put onto the market
The food integrator preferably comprises Klamath algae in the form of powder. Furthermore, its concentrations are preferably similar to those of the Aloe Vera.

An example of Klamath algae is the one marketed by: Geophyt S.r.l. under the brand name of Proklama, or the one marketed by: Nutrigea under the brand name of Klamin.

Consequently, Klamath algae is preferably contained, in a recommended quantity, in relation to the Mastiha resin, in doses weighing between 40% and 60% inclusive, more preferably between 45% and 55% and even more preferably in doses equal to about a half.

In addition to what has already been described, the food integrator can comprise other ingredients.

The food integrator also comprises Mallow.

Common mallow (Malva sylvestris L.) is a plant that belongs to the Malvaceae family. It is, in particular, a herbaceous plant with an upright, prostrate stem that can grow from 60 to 80 cm, with palminerved-shaped leaves that contain from 5 to 7 lobes with an irregularly serrated margin.

The active ingredients of said plant are principally found in the flowers and leaves, which are rich in mucilage and mainly used for their emollient and antitussive properties and in catarrhal forms of the upper bronchial airways, and it also contains potassium, calcium oxalate, vitamins and pectin.

The food integrator preferably comprises mallow as a hydroglycerin extract from the leaves.

An example of Mallow is the one marketed by: Sanofi under the brand name of Bonlax, or the one marketed by: Aboca under the brand name of Neobianacid.

Furthermore, mallow is preferably contained, in a recommended quantity, in relation to the Mastiha resin, in doses weighing between 50% and 70% inclusive, more preferably between 55% and 66% and even more preferably in doses equal to about 67%.

The food integrator can also comprise a thickener.

The thickener, or adhesive, is preferably a substance that is suitable for increasing the viscosity of the supplement, also to increase its absorption capacity by users, for example for the oesophagus.

The thickener is preferably composed of Xanthan gum.

Xanthan gum is a polysaccharide obtained by means of a fermentation process, typically in pure culture, of a carbohydrate, by natural strains of the bacteria Xanthomonas campestris. The carbohydrate can be glucose or sucrose and the bacteria is generally purified with ethanol or dried, ground 2-propanol.

The Xanthan gum is preferably in the form of powder and can be water soluble.

The Xanthan gum is preferably contained, in a recommended quantity, in relation to the Mastiha resin, in doses weighing between 20% and 30% inclusive, more preferably between 23% and 27% and even more preferably in doses equal to about 25%.

The food integrator also comprise Hyaluronic Acid.

In particular, the supplement comprises linear hyaluronic acid. It is a non sulphate glucosaminoglycan, without a protein core of the unbranched polysaccharide chain produced from the condensation of thousands of disaccharide units formed, in turn, from residues of glucuronic acid and N-acetylglucosamine bonded together, alternatively, from glycosidic β1→4 and β1→3 bonds, as well as intramolecular hydrogen bonds, which stabilise their conformations.

Hyaluronic acid has a high level of hydration due to the fact that it can compound with numerous water molecules, given its solubility deriving from the elevated polarity of the hyaluronate molecule.

An example of hyaluronic acid is the one marketed by: Eyepharma under the brand name of lalupec, or the one marketed by: Ibsa farmaceutici under the brand name of laluril.

Hyaluronic acid is preferably contained, in a recommended quantity, in relation to the Mastiha resin, in doses weighing between 18% and 30% inclusive, more preferably between 20% and 25% and even more preferably in doses equal to about 22%.

The food integrator, which is preferably intended for oral use, can also comprise a flavouring.

The flavouring is a substance defining a specific flavour. The flavour can therefore be a natural flavouring, a natural-identical flavouring or an artificial flavouring.

In the first case, the aroma is extracted directly from elements found in nature, such as flowers, fruits or other plants, whereas, the other two flavourings are typically obtained by chemical synthesis.

The flavouring is preferably a natural flavouring.

In detail, the flavouring is not composed of muscle relaxant type substances, such as mint, or acidic substances, such as citrus fruits.

The flavouring is preferably contained, in a recommended quantity, in relation to the Mastiha resin, in doses weighing between 75% and 110% inclusive, more preferably between 85% and 95% and even more preferably in doses equal to about 90%.

In conclusion, the supplement can also comprise preservatives and a sweetener.

The preservative substances can comprise potassium sorbate and/or sodium benzoate, while the sweetener can be composed of sucralose.

The preservatives are preferably contained, each, in a recommended quantity, in relation to the Mastiha resin, in doses between 30% and 40%, more preferably between 33% and 38% and even more preferably in doses equal to about 36%.

If, for example, the preservatives comprise both sodium benzoate and potassium sorbate, the doses and quantities expressed shall be considered as the sum of the quantities of the single preservatives. Furthermore, the single preservatives are preferably of the same quantity.

Finally, the sweetener is contained in doses, in relation to the Mastiha resin, comprised between 1% and 6%, more preferably between 2% and 5% and more opportunely about 4%.

The food integrator for use in anti-neoplastic therapies according to the invention offers important advantages.

In fact, the food integrator can prevent the side effects caused by the radiotherapy, chemotherapy or radio chemotherapy.

The combined, synergistic effect of Aloe Vera, Klamath algae and Mastiha resin significantly reduces the feeling of pain because all of the ingredients have inhibiting effects in this regard.

However, in addition, each ingredient makes a specific contribution that not only inhibits a user's feeling of pain, but which also inhibits the development of oral or oesopharyngeal mucositis, as well as the known side effects caused by radiological type therapies.

Aloe Vera is a powerful cicatrizant, which accelerates the processes of filling the gaps and wounds caused by the radiological side effects.

Furthermore, Klamath algae blocks the ionising radiation, acting as a shield against radiation during the radiological therapy.

Mastiha resin further strengthens the anti-inflammatory effects and boosts the healing effects of the Aloe Vera. It is deposited on the gaps, creating a protective layer, which assists the Aloe Vera, while protecting the wound from attacks of acidic substances.

Consequently, the synergy of the ingredients makes the supplement excellent for both of the stated conditions, combining the necessary beneficial effects in one single product.

The effects of the additional ingredients are also suitable for synergistically strengthening the previous aspects. The hyaluronic acid increases the hydration of the tissues, accelerating healing when it comes into contact with the Aloe.

Mallow also contributes to the supplement's moistening effects.

Moreover, the flavourings increase user compliance making the taste and the smell of the food integrator more pleasant, without any disagreeable side effects, as is usually the case.

In fact, the citrus fruit and mint flavourings, which are particularly common, increase the debilitating effects of mucositis.

Citrus fruits are acids and consequently increase the perception of pain when deposited on the wounds, instead, since mint is a muscle relaxant, it relaxes the cardias, allowing the acidic gastric juices to flow back up, which may come into contact with the damaged areas.

Furthermore, as the supplement is principally made up of natural products with specific, synergetic effects, it does not include the side effects of the previously described drugs of the prior art. Moreover, compared to the latter, the effects of reducing the lesions is combined with a pain-killing action.

Therefore, the invasiveness of the supplement is significantly reduced, also because as the guaranteed effects are so high they require limited use.

The food integrator for use in anti-neoplastic therapies is preferably contained in an aqueous solution in containers comprising 200 ml of product.

The sufficient foreseen use of the supplement according to the claim envisages an intake of 30 ml of the substance per day, divided into separate doses of 10 ml throughout the day.

Consequently, one bottle or container can be used for at least one week and consumption is extremely reduced compared to the drugs of the prior art.

This last aspect also has a significant impact on costs.

Therefore, a further advantage of the supplement is that it is cheaper than the current state-of-the-art.

The invention is subject to variations, which come within the scope of the inventive concept defined by the claims.

For example, to improve user compliance, the supplement in an aqueous solution can be gelled to increase its viscosity.

Said conformation increases the effects of the supplement because a greater amount is deposited on the wounds and the gel contributes to creating a surface film over the oesophageal canal, which prevents the acidic gastric flow from going back up.

In said context, all materials, shapes and sizes can be used.

## Claims

1. A supplement for use in the anti-neoplastic therapies **characterised by** the fact of comprising Aloe Vera, Klamath algae, Mastiha resin, hyaluronic acid and mallow.

2. The supplement for use according to at least one preceding claim, wherein said Aloe Vera is contained in doses comprised between 40% and 60% in relation to the quantity in weight of said Mastiha resin.

3. The supplement for use according to at least one preceding claim, wherein said Klamath algae is contained in doses comprised between 40% and 60% in relation to the quantity in weight of said Mastiha resin.

4. The supplement for use according to at least one preceding claim, wherein said Mastiha resin is contained in doses comprised between 17% and 27% in relation to the total, excluding the water or solvent.

5. The supplement for use according to the preceding claim, wherein said hyaluronic acid is contained in doses comprised between 1% and 9% of the total quantity and wherein said hyaluronic acid is comprised in said aqueous solution in doses comprised between 18% and 30% in relation to the quantity in weight of said Mastiha resin.

6. The supplement for use according to at least one preceding claim, comprising a thickening substance composed of Xanthan gum.

7. The supplement for use according to at least one preceding claim contained in an aqueous solution comprising purified water.

8. The supplement for use according to at least one preceding claim, comprising a flavouring, which is not composed of muscle relaxant type substances, such as mint or acidic substances, such as citrus fruits.

9. The supplement for use according to claim 7, wherein said aqueous solution is gelled.

10. The supplement for use according to at least one preceding claim, wherein said anti-neoplastic therapy is radiotherapy.

## Patentansprüche

1. Ergänzungsmittel zur Verwendung in den antineoplastischen Therapien, **dadurch gekennzeichnet, dass** es Aloe Vera, Klamath-Alge, Mastixharz, Hyaluronsäure und Malve umfasst.

2. Ergänzungsmittel zur Verwendung nach mindestens einem vorhergehenden Anspruch, wobei das Aloe Vera in einer Dosierung zwischen 40 % und 60 % in Bezug auf die Gewichtsmenge des Mastixharzes enthalten ist.

3. Ergänzungsmittel zur Verwendung nach mindestens einem vorhergehenden Anspruch, wobei die Klamath-Alge in einer Dosierung zwischen 40 % und 60 % in Bezug auf die Gewichtsmenge des Mastixharzes enthalten ist.

4. Ergänzungsmittel zur Verwendung nach mindestens einem vorhergehenden Anspruch, wobei das Mastixharz in einer Dosierung zwischen 17 % und 27 % in Bezug auf die Gesamtmenge, ohne Wasser oder Lösungsmittel, enthalten ist.

5. Ergänzungsmittel zur Verwendung nach dem vorhergehenden Anspruch, wobei die Hyaluronsäure in einer Dosierung zwischen 1 % und 9 % der Gesamtmenge enthalten ist und wobei die Hyaluronsäure in der wässrigen Lösung in einer Dosierung zwischen 18 % und 30 % in Bezug auf die Gewichtsmenge des Mastixharzes enthalten ist.

6. Ergänzungsmittel zur Verwendung nach mindestens einem vorhergehenden Anspruch, umfassend eine Verdickungssubstanz bestehend aus Xanthan-Gummi.

7. Ergänzungsmittel zur Verwendung nach mindestens einem vorhergehenden Anspruch, das in einer wässrigen Lösung enthalten ist, die gereinigtes Wasser umfasst.

8. Ergänzungsmittel zur Verwendung nach mindestens einem vorhergehenden Anspruch, umfassend ein Aromastoff, der nicht aus muskelentspannenden Substanzen wie Minze oder sauere Substanzen wie Zitrusfrüchten besteht.

9. Ergänzungsmittel zur Verwendung nach Anspruch 7, wobei die Lösung geliert wird.

10. Ergänzungsmittel zur Verwendung nach mindestens einem vorhergehenden Anspruch, wobei die antineoplastische Therapie eine Strahlenbehandlung ist.

## Revendications

1. Complément destiné à être utilisé dans des thérapies antinéoplasiques, **caractérisé en ce qu'**il comprend de l'Aloe Vera, des algues Klamath, de la résine de Mastiha, de l'acide hyaluronique et de la mauve.

2. Le complément destiné à être utilisé selon au moins une revendication précédente, dans lequel ladite
Aloe Vera est contenue en des doses comprises entre 40% et 60% par rapport à la quantité en poids de ladite résine de Mastiha.

3. Le complément destiné à être utilisé selon au moins une revendication précédente, dans lequel lesdites algues Klamath sont contenues en des doses comprises entre 40% et 60% par rapport à la quantité en poids de ladite résine de Mastiha.

4. Le complément destiné à être utilisé selon au moins une revendication précédente, dans lequel ladite résine de Mastiha est contenue en des doses comprises entre 17% et 27% par rapport au total, à l'exclusion de l'eau ou du solvant.

5. Le complément destiné à être utilisé selon la revendication précédente, dans lequel ledit acide hyaluronique est contenu en des doses comprises entre 1% et 9% de la quantité totale et dans lequel ledit acide hyaluronique est compris dans ladite solution aqueuse en des doses comprises entre 18% et 30% par rapport à la quantité en poids de ladite résine de Mastiha.

6. Le complément destiné à être utilisé selon au moins une revendication précédente, comprenant une substance épaississante composée de gomme xanthane.

7. Le complément destiné à être utilisé selon au moins une revendication précédente contenu dans une solution aqueuse comprenant de l'eau purifiée.

8. Le complément destiné à être utilisé selon au moins une revendication précédente, comprenant un aromatisant, qui n'est pas composé de substances de type relaxant musculaire, telles que la menthe ou de substances acides, telles que les agrumes.

9. Le complément destiné à être utilisé selon la revendication 7, dans lequel ladite solution aqueuse est gélifiée.

10. Le complément destiné à être utilisé selon au moins une revendication précédente, dans lequel ladite thérapie antinéoplasique est une radiothérapie.
